Europäisches Patentamt

European Patent Office

Office européen des brevets

(19)

(11) Veröffentlichungsnummer: **0 022 306**
**B1**

(12) # EUROPÄISCHE PATENTSCHRIFT

(45) Veröffentlichungstag der Patentschrift:
06.04.83

(51) Int. Cl.³: **H 04 N 1/38, H 04 N 1/41**

(21) Anmeldenummer: **80200664.3**

(22) Anmeldetag: **08.07.80**

(54) Verfahren und Anordnung zur Fehlerkorrektur bei Faksimileübertragung.

(30) Priorität: **09.07.79 DE 2927710**

(43) Veröffentlichungstag der Anmeldung:
**14.01.81 Patentblatt 81/2**

(45) Bekanntmachung des Hinweises auf die Patenterteilung:
**06.04.83 Patentblatt 83/14**

(84) Benannte Vertragsstaaten:
**DE FR GB IT SE**

(56) Entgegenhaltungen:

**DE-A-2 347 835**
**DE-A-2 403 601**
**DE-A-2 640 157**
**DE-A-2 711 377**
**DE-A-2 719 419**
**DE-A-2 734 696**
**DE-A-2 751 022**
**DE-A-2 846 939**

(73) Patentinhaber: **N.V. Philips' Gloeilampenfabrieken,**
**Groenewoudseweg 1, NL-5621 BA Eindhoven (NL)**

(72) Erfinder: **Rothgordt, Ulf Int. Octrooibureau B.V.,**
**Bargkoppel 33, D-2000 Norderstedt (DE)**

(74) Vertreter: **Poddig, Dieter et al, Philips Patentverwaltung**
**GmbH Steindamm 94, D-2000 Hamburg 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Verfahren und Anordnung zur Fehlerkorrektur bei Faksimileübertragung

Die Erfindung betrifft ein Verfahren zur Fehlerkorrektur bei Faksimileübertragung von zweiwertiger grafischer Information auf einer Vorlage mittels elektrischer Signale, wobei die elektrischen Signale der Helligkeitswerte der aufeinanderfolgenden Bildpunkte beim zeilenweisen Abtasten der Vorlage im Sender so in Code-Wörter umgewandelt werden, dass die Anzahl und gegebenenfalls die Länge der Code-Wörter über eine Zeile unterschiedlich ist, diese Code-Wörter zusammen mit Zeilenende-Markierungen zum Empfänger übertragen und die dort empfangenen Code-Wörter entsprechend der sendeseitigen Codierung in eine Folge elektrischer Signale entsprechend einer Folge von Bildpunkten zurückgewandelt gespeichert werden und die Anzahl der aus den empfangenen Code-Wörtern rückgewandelten Bildpunkte jeder Zeile mit einer fest vorgegebenen Bildpunktzahl verglichen wird und bei Abweichung der Anzahl der Bildpunkte einer Zeile von der vorgegebenen Bildpunktzahl die Signale dieser Zeile mit entsprechenden, gespeicherten Signalen der vorhergehenden und der folgenden Zeile verglichen und unterschiedliche Signale gezählt werden und bei Überschreitung eines vorgegebenen Schwellwerts durch die Zählung mindestens die den folgenden Signalen zugeordneten Bildpunkte der gestört empfangenen Zeile so verschoben werden, dass diese gesamte Zeile die vorgegebene Anzahl Bildpunkte enthält, sowie Anordnungen zur Durchführung des Verfahrens.

In der DE-OS 27 34 696.9 ist beschrieben, bei dem Vergleich der Bildpunkte der gestörten Zeile mit einer oder beiden benachbarten Zeilen jede Ungleichheit, d.h. auch eine Ungleichheit zu nur einer der benachbarten Zeilen, zu zählen und bei Erreichen einer bestimmten Anzahl Ungleichheiten eine Störung der Zeile anzunehmen. Dabei können zwischen den Ungleichheit zeigenden Bildpunkten auch viele Bildpunkte liegen, bei denen Gleichheit mit beiden benachbarten Zeilen vorliegt. Dieses Verfahren weist jedoch Mängel auf. Untersuchungen haben ergeben, dass dieses Verfahren einen zu breiten Streubereich für die Erkennung des Beginns eines gestörten Bereichs einer Zeile aufweist. Es wird einerseits oft bereits weit vor dem Beginn einer Störung die vorgegebene Anzahl ungleicher Bildpunkte festgestellt, beispielsweise durch eine grössere Anzahl sehr kleiner Schmutzflecken auf der abzutastenden Vorlage, und andererseits wird häufig der Beginn der Störung erst weit nach deren Auftreten erkannt, beispielsweise wenn eine Anzahl dünner und gegebenenfalls weiter auseinanderliegender Striche abgetastet wird, wobei im Falle einer Störung erst nach einer grösseren Anzahl von diesen senkrechten Strichen die vorgegebene Anzahl ungleicher Bildpunkte in benachbarten Zeilen erreicht werden kann.

Aus der DE-OS 27 19 419 ist ein Verfahren bekannt, bei dem jeweils eine Anzahl aufeinanderfolgender Bildpunkte zu einem Block zusammengefasst und das Verhältnis der Anzahl der Ungleichheiten zu der Anzahl der schwarzen Bildpunkte in der gestörten Zeile bestimmt wird und bei Unterschreiten dieses Verhältnisses unter einen vorgegebenen Wert der Beginn einer Störung angenommen wird. Ein Nachteil dieses bekannten Verfahrens ist die Blockstruktur, wodurch sich bei der Bestimmung des Störungsortes ein Quantisierungseffekt von der Grössenordnung eines Blocks ergibt, und ausserdem ist auch dabei bei ungünstiger Lage eines Blocks zu abgetasteten Zeichen eine Störung nicht oder zu spät erkennbar. Das falsche Erkennen einer Störung bei einer Vorlage mit vielen kleinen Schmutzflecken ist bei dem letztgenannten Verfahren zwar weniger wahrscheinlich als bei dem Verfahren nach der erstgenannten Druckschrift, jedoch ebenfalls nicht ganz ausgeschlossen.

Aufgabe der Erfindung ist es, ein Verfahren anzugeben, mit dem mindestens der Beginn einer Störung in einer gestört empfangenen Zeile möglichst genau bestimmt wird und die gestörte Zeile möglichst weitgehend rekonstruiert werden kann. Diese Aufgabe wird erfindungsgemäss bei dem eingangs genannten Verfahren dadurch gelöst, dass die Anzahl nur unmittelbar aufeinanderfolgender schwarzer Bildpunkte bzw. Bildpunkte des weniger häufigen Helligkeitswertes, deren entsprechende Bildpunkte in beiden benachbarten Zeilen einen entgegengesetzten Helligkeitswert aufweisen, gezählt wird, und dass bei Überschreitung des vorgegebenen Schwellwerts durch die Zählung der Anfang dieser Zählung als Beginn einer Störung ausgewertet wird und die Verschiebung des Rests der gestörten Zeile von dem ersten durch diese Zählung ermittelten Bildpunkt an erfolgt.

Mit diesem erfindungsgemässen Verfahren werden isolierte schwarze Striche, die in nur einer wiedergegebenen Zeile auftreten, als Merkmal für den Beginn einer Störung ausgewertet, da derartige schwarze Striche auch bei verschmutzten Vorlagen äusserst selten vorhanden sind, jedoch besonders dann auftreten, wenn in einer abgetasteten Zeile in Folge einer Störung während der Übertragung Bildpunktfolgen gleicher Helligkeit mit falscher Länge im Empfänger decodiert werden. Dabei wird, obwohl erst am Ende eines solchen isolierten schwarzen Striches festgestellt werden kann, dass er sich nicht wirklich in einem grösseren schwarzen Bereich fortsetzt, während der tatsächliche Beginn der Störung jedoch mit dem Beginn des isolierten schwarzen Striches zusammenfällt, die Verschiebung des Rests der gestörten Zeile von Beginn der Zählung der vorgegebenen Anzahl an vorgenommen, da die Signale der Bildpunkte der Zeile ja gespeichert vorliegen. Dies kann durch Auswertung der Anzahl selbst durchgeführt werden.

Die vorgegebene Anzahl, bei der eine Störung angenommen wird, kann abhängig von der Feinheit der Abtastung im Zusammenhang mit der Feinheit der dunklen Teile der Vorlage gewählt werden. Es kann auch ein isolierter schwarzer Strich, der eine vorgegebene Länge überschreitet, als Merkmal für den Beginn eines gestörten Bereiches direkt ausgewertet werden.

Es können abzutastende Vorlagen mit besonders feinen waagerechten Strichen vorkommen, die jedoch praktisch immer eine Verbindung mit einem senkrechten Strich oder einem ähnlich geformten dunklen Bereich haben. Um einen solchen Strich nicht fälschlich als fehlerhafte Folge von Bildsignalen auszuwerten, ist es zweckmässig, dass die Bildpunkte mit entgegengesetztem Helligkeitswert nur dann gezählt bzw. die Zählung ausgewertet wird, wenn diesen Bildpunkten in der gestörten Zeile ein weisser Bildpunkt bzw. ein Bildpunkt des häufigeren Helligkeitswertes sowohl unmittelbar vorangeht bzw. diese Bildpunkte unmittelbar zu Beginn einer Zeile beginnen als auch ein solcher Bildpunkt unmittelbar folgt. Hierdurch werden auf der Empfangsseite wirklich nur solche isolierten schwarzen Striche als Fehler gewertet, die keinen Zusammenhang mit irgendeinem anderen dunklen Bereich haben.

Um die Lesbarkeit bzw. Erkennbarkeit der vom Empfänger wiedergegebenen Darstellung der im Sender abgetasteten Vorlage zu verbessern, ist es zweckmässig, dass die Zählung der Anzahl nur unmittelbar aufeinanderfolgender Bildpunkte des weniger häufigen Helligkeitswertes, deren entsprechende Bildpunkte in beiden benachbarten Zeilen einen entgegengesetzten Helligkeitswert aufweisen, auch nach der ersten Überschreitung des vorgegebenen Schwellwertes fortgesetzt wird und dass die nach dem Anfang der ersten Zählung, die zur Überschreitung des vorgegebenen Schwellwertes geführt hat, folgenden Bildpunkte bis nach dem Ende der letzten Zählung, die zu einer Überschreitung des vorgegebenen Schwellwertes führt, nicht dargestellt und durch andere Bildpunkte, insbesondere von benachbarten Zeilen, ersetzt werden.

Auf diese Weise ist es möglich, die gestörte Bildzeile so weitgehend zu rekonstruieren, dass die Störung der Zeile fast nicht mehr erkennbar ist.

Anordnungen zur Durchführung des erfindungsgemässen Verfahrens sind in den weiteren Unteransprüchen gekennzeichnet.

Ausführungsbeispiele der Erfindung werden nachstehend anhand der Zeichnung erläutert. Es zeigen:

Fig. 1 ein Beispiel für eine Störung in einer wiedergegebenen Vorlage,

Fig. 2 ein Blockschaltbild einer vollständigen Anordnung nach der Erfindung,

Fig. 3a und 3b zwei Ausführungen der Vergleichsanordnung,

Fig. 4 einen Aufbau der Speicheranordnung aus Schieberegistern,

Fig. 5 und 6 schematische Darstellungen zur Erläuterung der Vorgänge bei der Korrektur einer gestörten Zeile.

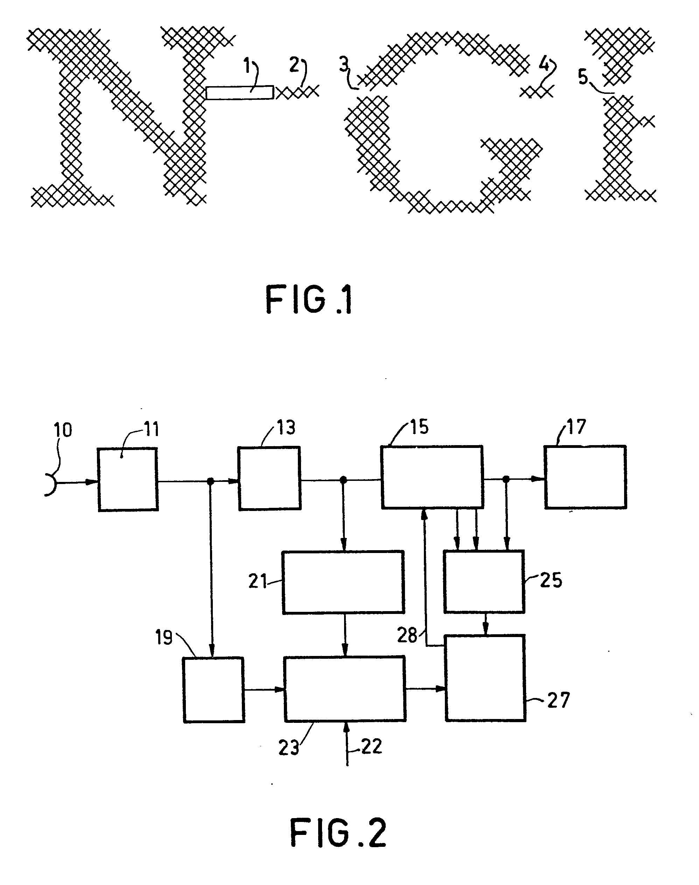

Die Fig. 1 zeigt eine im Empfänger erzeugte Darstellung einer im Sender abgetasteten Vorlage, bei der während der Übertragung vom Sender zum Empfänger eine Störung aufgetreten ist. Infolge dieser Störung ist der weisse Bereich 1, der in Fig. 1 eingerahmt dargestellt ist, kürzer als der Vorlage entsprechend decodiert worden, so dass die in dieser Zeile folgenden schwarzen Bereiche 2 und 4 nach links verschoben sind, während in den entsprechenden Buchstaben an den Stellen 3 und 5 weisse Bereiche entstehen. Es ist klar, dass sich diese Verschiebung bis zum Ende dieser Zeile fortsetzt, sofern nicht noch weitere Störungen in dieser Zeile auftreten. Dabei sind die verschobenen schwarzen Bereiche wesentlich störender als die weissen Unterbrechungen in den Strichen. Wenn es gelingt, den auf den Teil 1 folgenden Teil der gestörten Zeile so zu verschieben, dass diese gestörte Zeile mit den vorhergehenden und folgenden Zeilen endet, fällt der isolierte schwarze Strich 2 gerade in die weisse Lücke 3 usw., so dass die Störung bei der Darstellung der empfangenen Signale überhaupt nicht mehr sichtbar ist.

Ein Blockschaltbild des Empfängers für die vom Sender erzeugten und codierten sowie auf einen Träger modulierten Faksimile-Signale ist in Fig. 2 dargestellt. Die modulierten Signale werden am Eingang 10 empfangen und einem Demodulator 11 zugeführt, der daraus wieder binäre Signale erzeugt. Diese binären Signale werden einem Decodierer 13 zugeführt, der daraus die Signale entsprechend dem darzustellenden Bild in der vom Sender vorgegebenen Länge bzw. Anzahl entsprechend der Anzahl zugehöriger Bildpunkte des jeweiligen Helligkeitswertes erzeugt. Diese Signale werden dem Speicher 15 zugeführt, der drei aufeinanderfolgende Zeiln speichert und gegenenenfalls verschiebt und korrigiert und die jeweils zuerst gespeicherte Zeile einem Drucker 17 zuführt.

Die Anzahl der vom Decodierer 13 erzeugten Signale, unabhängig von ihrem Helligkeitswert, werden je Zeile in einem Zähler 21 gezählt. Die vom Demodulator 11 abgegebenen binären codierten Signale werden ausserdem einem Decodierer 19 zugeführt, der beim Empfang eines Zeilenende-Zeichens ein Signal an einen Vergleicher 23 abgibt. Dieser Vergleicher vergleicht den Zählerstand des Zählers 21 in diesem Augenblick mit einer fest vorgegebenen Zahl, die am Eingang 22 zugeführt wird und im Falle einer Standard-Faksimileübertragung den Wert 1728 hat. Wenn der Zähler 21 bei einem Signal des Zeilenende-Decodierers 19 nicht gerade diesen Stand einnimmt, gibt der Vergleicher 23 ein Signal an die Steueranordnung 27 ab, die daraufhin über die Leitung 28 den Speicher 15 zur Durchführung einer Zeilenverschiebung und gegenbenenfalls Korrektur ansteuert. Dabei vergleicht der Vergleicher 25 die Signale entsprechender Bildpunkte der drei im Speicher 15 gespeicherten Zeilen und führt der Steueranordnung 27 das Vergleichsergebnis zu.

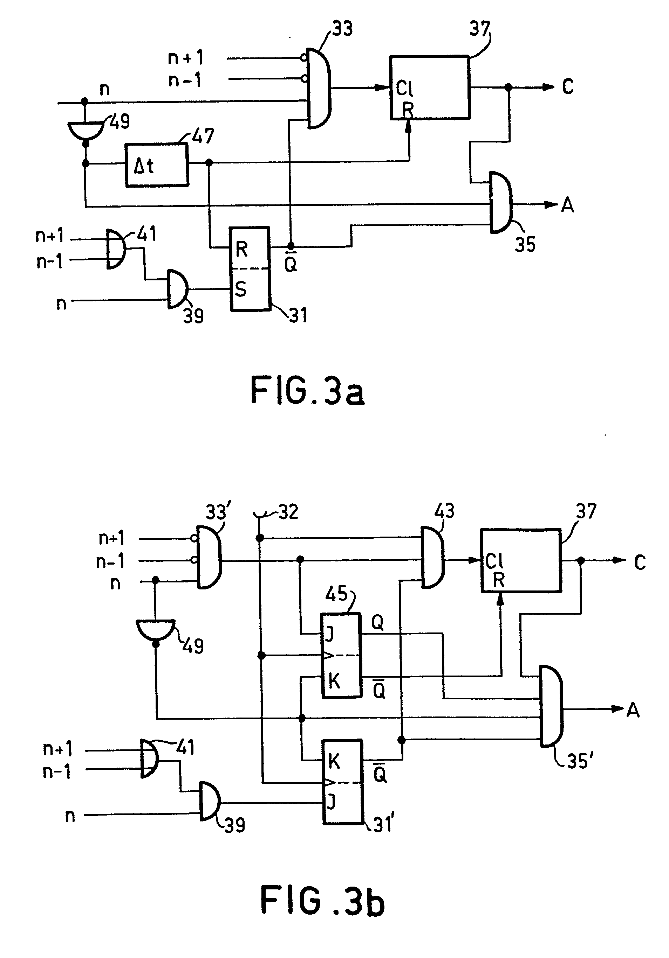

Eine Ausführungsform des Vergleichers 25 ist in Fig. 3a angegeben. Darin stellt der Block 37 den Störungszähler dar, der die Anzahl aufeinanderfolgender Bildpunkte mit unterschiedlichen Werten in drei benachbarten Zeilen, d. h. die Länge des isolierten schwarzen Striches zählt und der hier der Übersichtlichkeit halber mit in die Vergleichsanordnung einbezogen ist. Die Vergleichsanordnung besteht im einfachsten Falle aus einem Verknüpfungsglied 33, das ein Signal an den Takteingang Cl des Störungszählers 37 abgibt, wenn das von der Speicheranordnung 15 zugeführte Signal eines Bildpunktes der gestörten Zeile n den logischen Wert «1» hat, das üblicherweise bei einem schwarzen Bildpunkt erzeugt wird, und die Werte der entsprechenden Bildpunkte der beiden benachbarten Zeilen n+1 und n—1 den logischen Wert «0» haben, wie durch die kleinen Kreise an den entsprechenden Eingängen des Verknüpfungsgliedes 33 angegeben, das hier UND-Glied ist. Die Eingänge dieses UND-Gliedes 33 sind mit den Bezeichnungen der entsprechenden Zeilen versehen. Eine Folge der angegebenen Wertekombination stellt jeweils Bildpunkte aus einem genau in Zeilenrichtung verlaufenden waagerechten Strich dar, der nur genau die Breite einer Abtastzeile hat, und zwar der gestört empfangenen Zeile n. Da ein solcher Strich auf einer Vorlage nur sehr selten auftritt und die Wahrscheinlichkeit, dass er zufällig auch in einer gestörten Zeile auftritt, noch geringer ist, kann ein solcher Strich als Beginn einer Störung gewertet werden. Der Störungszähler 37 zählt dann die Anzahl aufeinanderfolgender Bildpunkte eines solchen Striches und gibt somit am Zählausgang C die Länge dieses Striches an. Dieses Signal könnte bereits als Fehlersignal ausgenutzt werden, jedoch ist in der Fig. 3a ein besonderes UND-Glied 35 vorgesehen, das am Ausgang A das Fehlersignal erst unter bestimmten zusätzlichen Bedingungen erzeugt. Insbesondere wird dieses Fehlersignal erst erzeugt, wenn die Zählerstellung am Ausgang C einen vorgegebenen Wert überschritten hat und wenn der schwarze Strich in der gestörten Zeile n beendet ist, d. h. wenn das Signal an diesem entsprechenden Eingang auf den Wert «0» geht und somit über den Inverter 49 ein Signal «1» an den zweiten Eingang des UND-Gliedes 35 gelangt. Dieses Signal wird durch die Stufe 47 verzögert auch auf den Rücksetzeingang R des Störungszählers 37 geführt, wodurch dieser auf die Anfangsstellung zurückkehrt und somit das Signal am Ausgang A wieder beendet, so dass nur ein kurz andauerndes Signal erzeugt wird. Der Grund für die Auswertung erst am Ende des Striches wird nachfolgend erläutert.

Bei der bisherigen Beschreibung ist der von dem Ausgang $\overline{Q}$ des Speicherelements 31 kommende Eingang der UND-Glieder 33 und 35 vernachlässigt worden. Dieses Speicherelement 31 ist ein R-S-Flipflop, das durch einen nicht dargestellten Rücksetzeingang in der Ruhestellung am Ausgang $\overline{Q}$ ein Signal «1» führt. An den Setzeingang S dieses Flipflops ist der Ausgang eines UND-Gliedes 39 angeschlossen, dessen mit n bezeichneter Eingang in entsprechender Weise wie beim UND-Glied 33 das Signal eines Bildpunktes der gestörten Zeile n erhält und dessen anderer Eingang mit dem Ausgang eines ODER-Gliedes 41 verbunden ist, das die Signale der Bildpunkte der beiden benachbarten Zeilen empfängt. Es handelt sich also um die gleichen Eingänge wie bei dem UND-Glied 33, die hier lediglich der Übersichtlichkeit halber nochmals dargestellt bzw. bezeichnet sind. Das Flipflop 31 wird somit dann in die Arbeitsstellung gesetzt, wobei der Ausgang $\overline{Q}$ das Signal «0» abgibt, wenn sowohl in der gestörten Bildzeile wie auch gleichzeitig in mindestens einer der beiden benachbarten Zeilen ein schwarzer Bildpunkt auftritt, was ein Merkmal dafür ist, dass es sich nicht um einen isolierten schwarzen Strich in der gestörten Zeile handeln kann. Eine solche Kombination von Bildpunktwerten kann auftreten, wenn dieser in Zeilenrichtung verlaufende schwarze Strich z. B. aus einem senkrechten Strich entspringt, so dass in diesem Falle das Flipflop 31 bereits zu Beginn des in Zeilenrichtung verlaufenden schwarzen Striches gesetzt ist und somit die UND-Glieder 33 und 35 sperrt, so dass dieser Strich nicht gezählt wird und auch kein Fehlersignal am Ausgang A erzeugen kann. Wenn dagegen erst nach einem isoliert begonnenen schwarzen Strich eine Verbreiterung auftritt, hat der Störungszähler 37 zwar bereits zu zählen begonnen, jedoch wird mit dem Auftreten der Verbreiterung das Flipflop 31 gesetzt und damit eine weitere Zählung gesperrt und ausserdem am Ende des schwarzen Striches in der gestörten Zeile die Erzeugung eines Fehlersignals am Ausgang A verhindert.

Dies tritt auch auf, wenn die Verbreiterung des schwarzen Striches erst ganz am Ende auftritt. Da das Flipflop 31 erst am Ende eines schwarzen Striches durch ein Ausgangssignal der Verzögerungsstufe 49 verzögert zurückgesetzt wird, wird sichergestellt, dass nur ein isolierter schwarzer Strich, der an keiner Stelle einen Zusammenhang mit einem schwarzen Punkt in einer der benachbarten Zeilen hat, ein Störungssignal am Ausgang A erzeugen kann.

In Fig. 3b ist eine andere Schaltung der Vergleichsanordnung 25 dargestellt, die gegenüber der Schaltung nach Fig. 3a erweitert ist, wobei gleiche Elemente mit gleichen Bezugszeichen versehen sind.

Das UND-Glied 33' wertet unmittelbar die Kombination für einen schwarzen Strich in der gestörten Zeile aus, da es ausser den drei Eingängen für die Bildpunktsignale keine weiteren Eingänge aufweist. Sein Ausgangssignal wird einem Eingang eines UND-Gliedes 43 zugeführt, von dem ein weiterer Eingang mit dem Ausgang $\overline{Q}$ des Speicherelements 31 verbunden ist. Da es vorkommen kann, dass innerhalb einer Folge mehrerer gleicher Bildpunktkombinationen beim Wechsel auf die jeweils folgende, gleiche Bildpunktkombination und damit Signalkombination an den Eingängen des UND-Gliedes 33' kein Signalwechsel an dessen Ausgang auftritt, der vom Störungszähler 37 gezählt werden kann, wird dem UND-Glied 43 ausserdem noch ein am Eingang 32 anliegendes Taktsignal zugeführt, das zweckmässig verschoben bzw. invers gegenüber den Taktsignalen ist, die das Zuführen der Signale der jeweils nächsten Bildpunktkombination im Speicher 15 bewirken. Damit steht für den Störungszähler 37 ein enwandfreies Zählsignal zur Verfügung.

Das Ausgangssignal des UND-Gliedes 33' wird ausserdem dem J-Eingang eines Speicherelements 45 zugeführt, das ebenso wie das Speicherelement 31' als J-K-Flipflop ausgeführt ist. Derartige Flipflops übernehmen das am J- oder am K-Eingang vorhandene Signal nicht unmittelbar, sondern erst mit dem nächsten Taktimpuls am Takteingang, der durch eine Pfeilspitze angedeutet ist. Dadurch wird zu Beginn eines schwarzen Striches das Flipflop 45 gesetzt, so dass der Ausgang Q ein Signal «1» führt und den betreffenden Eingang des UND-Gliedes 35' freigibt, das gegebenenfalls das Fehlersignal am Ausgang A erzeugt. Dieser Vorgang erfolgt auch, wenn der schwarze Strich nicht isoliert begonnen hat und das Flipflop 31' daher gesetzt ist, wodurch der Ausgang $\overline{Q}$ das Signal «0» führt und die beiden UND-Glieder 43 und 35' sperrt. Falls es sich jedoch tatsächlich um einen isolierten schwarzen Strich handelt, wird an dessen Ende, wenn der Störungszähler 37 durch Überschreiten einer vorgegebenen Zählerstellung C den entsprechenden Eingang des UND-Gliedes 35' freigibt, über das am Ende des Striches am Ausgang des Inverters 49 auftretende Signal «1» ein Störungssignal am Ausgang A erzeugt, und da dieses Ausgangssignal des Inverters 49 auch an den K-Eingängen der Flipflops 45 und 31' liegt, werden diese mit dem nächsten Taktsignal zurückgestellt. Durch das Signal «0» am Ausgang Q des Flipflops 45 wird dann das Störsignal am Ausgang A beendet, und durch das Signal «1» am Ausgang $\overline{Q}$ des Flipflops 45 wird dann der Zähler 37 zurückgesetzt. Damit ist der Anfangszustand wieder hergestellt, und ein neuer schwarzer Strich kann erfasst werden.

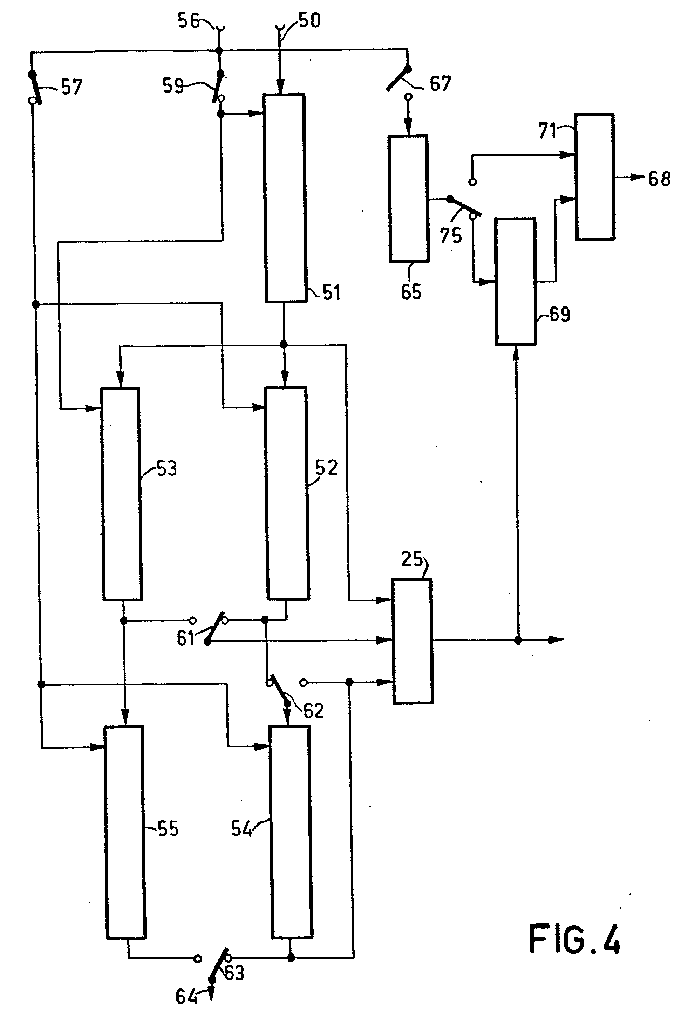

Die Fig. 4 zeigt eine Schaltungsanordnung, die die Speicheranordnung 15 der Fig. 2 mehr im einzelnen zeigt, wobei als Speichereinrichtungen Schieberegister verwendet worden sind. Dabei müssen, um entsprechende Bildpunkte von mindestens drei benachbarten Zeilen miteinander vergleichen zu können, zwei Zeilen sowie mindestens ein zusätzticher Bildpunkt gespeichert werden können. Da im Falle einer Störung eine Zeile aber auch fälschlich mit mehr Bildpunkten rekonstruiert wird, als einer Zeile entspricht, und andererseits für die Verschiebung und gegebenenfalls Korrektur der gestörten Bildzeile zusätzliche Speichereinrichtungen benötigt werden, sind in der Anordnung nach Fig. 4 fünf Schieberegister vorgesehen, von denen jedes die Kapazität für die Bildpunkte einer ganzen Zeile hat, wobei die Information teilweise doppelt gespeichert wird, so dass tatsächlich in der gesamten Anordnung nach Fig. 4 nur die Signale für die Bildpunkte von drei Zeilen gespeichert sind.

Die vom Decodierer 13 in Fig. 2 zurückgewandelten Signale für die Bildpunkte werden der Speicheranordnung nach Fig. 4 über den Eingang 50 zugeführt und gelangen auf den Serieneingang des Schieberegisters 51. Bei diesem wie auch bei den anderen Schieberegistern 52 bis 55 wird die Information jeweils seriell über die Leitung am oberen Rand des Blocks zugeführt und über die Leitung am unteren Rand des Blocks seriell abgenommen, und über die oben seitlich zugeführten Leitungen werden Schiebetakte zugeführt, die die in dem jeweiligen Schieberegister enthaltenen Informationen parallel vom Eingang zum Ausgang verschieben.

Der Ausgang des Schieberegisters 51 ist mit den Informationseingängen der Schieberegister 52 und 53 sowie mit einem Eingang des Vergleichers 25 verbunden, wobei letzterer bereits in der Fig. 2 dargestellt und beispielsweise nach der Fig. 3 aufgebaut sein kann. Der Ausgang des Schieberegisters 53 führt auf den Arbeitskontakt eines Umschalters 61 sowie auf den Serieneingang des Schieberegisters 55, dessen Ausgang mit dem Arbeitskontakt eines Umschalters 63 verbunden ist. Der Ausgang des Schieberegisters 52 führt auf die Ruhekontakte der Umschalter 61 und 62. Der Umschalter 61 verbindet einen Eingang des Vergleichers 25 je nach Stellung mit dem Ausgang entweder des Schieberegisters 52 oder des Schieberegisters 53. Der Umschalter 62 verbindet den Eingang des Schieberegisters 54 je nach Stellung mit dem Ausgang entweder des Schieberegisters 52 oder mit dem Ausgang des Schieberegisters 54. Der letztere Ausgang ist ausserdem mit dem dritten Eingang des Vergleichers 25 sowie mit dem Ruhekontakt des Umschalters 63 verbunden. Dieser Umschalter 63 verbindet den Ausgang 64 der Speicheranordnung, der allgemein mit einer Druckeinrichtung verbunden ist, je nach Stellung mit dem Ausgang entweder des Schieberegisters 54 oder des Schieberegisters 55. In der dargestellten Stellung der Umschalter 61 bis 63 sind die Schieberegister 51, 52 und 54 in Reihe geschaltet, wobei die Vergleichsanordnung jeweils mit den Ausgängen dieser Schieberegister verbunden ist und die dem Ausgang 64 zugeführte Information vom Ausgang des letzten Schieberegisters 54 in dieser Reihe abgenommen wird. Die Schieberegister 53 und 55 haben im Normalfall, d.h. soweit keine Zeile gestört empfangen wird, praktisch keine Bedeutung.

Insbesondere für den Fall einer gestört empfangenen Zeile ist zunächst darauf hinzuweisen, dass die Taktsignaleingänge der Schieberegister 52, 54 und 55 parallel geschaltet und über den Schalter 57 mit dem Eingang 56 verbunden sind, der ein Taktpulssignal erhält. Ferner sind die Schiebetakteingänge der Schieberegister 51 und 53 parallel über einen Schalter 59 mit dem Eingang 56 verbunden. Ferner ist noch ein Zähler 65 vorgesehen, dessen Zähleingang über den Schalter 67 mit dem Eingang 56 verbunden werden kann und dessen paralleler Zählerausgang, der hier nur der Einfachheit halber als eine Leitung dargestellt ist, über den Umschalter 75 entweder mit dem Paralleleingang eines Registers 69 oder mit dem einen Eingang eines Vergleichers 71 verbunden ist, dessen anderer Eingang mit dem Ausgang des Registers 69 verbunden ist.

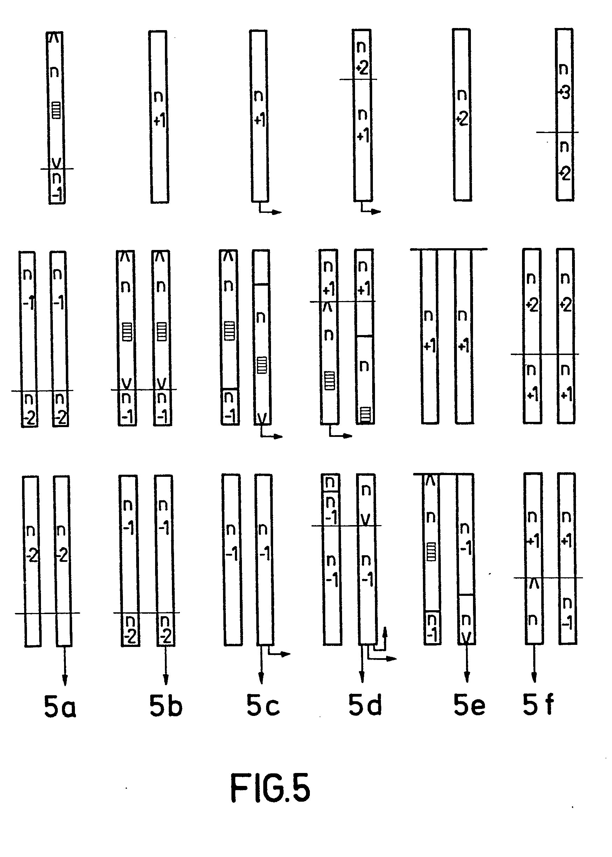

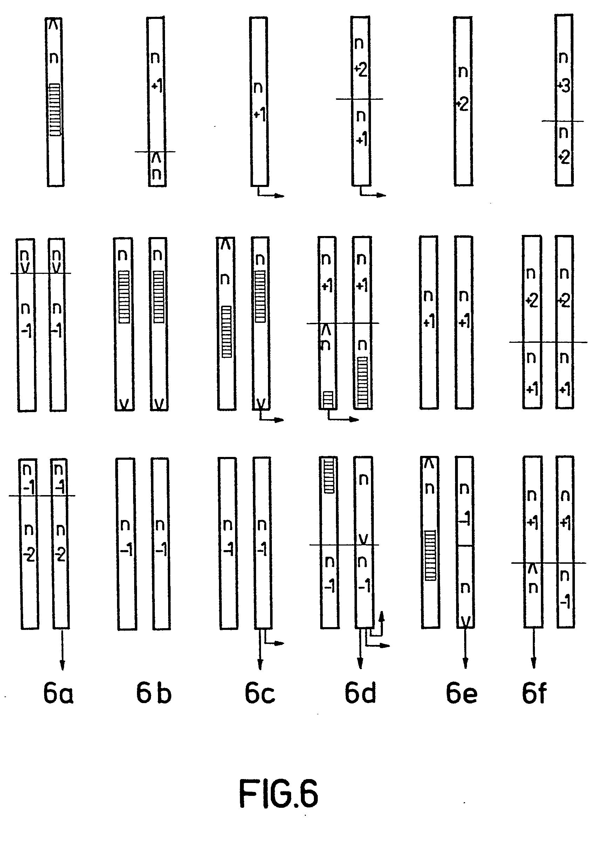

Zur Erläuterung der Funktionen wird auf die Fig. 5 und 6 Bezug genommen, in denen die Schieberegister symbolisch in der gleichen Anordnung wie in Fig. 4 angedeutet und deren jeweiliger Inhalt zu verschiedenen Zeipunkten von a bis f angegeben ist. Dabei werden die Fälle, dass eine zu kurze Zeile und eine zu lange Zeile rekonstruiert wird, getrennt erläutert, wobei die Bezugszeichen der Schieberegister in Fig. 4 auch für die Fig. 5 und 6 verwendet werden. Zur übersichtlicheren Erläuterung ist hier der Anfang der gestörten Zeile durch eine nach unten gerichtete Pfeilspitze und deren Ende durch eine nach oben gerichtete Pfeilspitze angedeutet.

In der Spalte a der Fig. 5 ist der Augenblick dargestellt, in dem eine Zeilenende-Markierung empfangen wird, bevor in dem Schieberegister 51 eine vollständige Zeile n rekonstruiert wurde, womit feststeht, dass diese Zeile gestört empfangen wurde. Der Übersichtlichkeit halber ist der gestörte Bereich in der Zeile n, der also tatsächlich grösser sein müsste, querschraffiert dargestellt, obwohl dieser Bereich bzw. dessen Lage im Empfänger zunächst noch nicht bekannt ist. Bevor nun irgendein besonderer Korrekturvorgang startet, wird zunächst die auf die gestörte Zeile folgende Zeile n+1 vollständig decodiert und im Schieberegister 51 gespeichert, so dass dann die gestörte Zeile n in den Schieberegistern 52 und 53 gespeichert ist (Fig. 5b). Am Ende dieser beiden Schieberegister ist dann noch der Rest der der gestörten Zeile vorhergehenden Zeile n—1 gespeichert, deren vorderer Teil in den Schieberegistern 54 und 55 enthalten ist. In deren Endteil ist wieder der Rest der zweiten Zeile n—2 vor der gestörten Zeile enthalten, der jedoch nur aus dem Schieberegister 54 zum Drucker übertragen wird, wie der nach unten gerichtete Pfeil andeutet.

Mit dem Erreichen des in Fig. 5b dargestellten Zustandes beginnt der erste Korrekturvorgang, und zwar wird der Schalter 59 in Fig. 4 geöffnet, während der Schalter 67 weiterhin geöffnet ist, und dem Eingang 56 werden eine Anzahl Taktimpulse entsprechend der fehlenden Länge der gestörten Zeile zugeführt. Dadurch wird der in Fig. 5c dargestellte Zustand erreicht, bei dem also die vorhergehende Zeile n—1 bis ganz an das Ende der Schieberegister 54 und 55 gelangt ist, der Anfang der gestörten Zeile n am Ende des Schieberegisters 52 und das Ende dieser Zeile am Anfang des Schieberegisters 53 enthalten ist. Nun wird der Schalter 59 wieder geschlossen, so dass alle Schieberegister wieder parallel Schiebetakte erhalten und die vorhergehende Zeile n—1 zum Drucker übertragen wird, und gleichzeitig wird der Schalter 67 geschlossen, so dass nun der Zähler 65 zu zählen beginnt, und gleichzeitig wird der Vergleich im Vergleicher 25 gestartet, wobei dieser Vergleicher mit den Ausgängen der Schieberegister 51, 52 und 54 verbunden ist, wie durch die abgeknickten Pfeile an den Ausgängen der betreffenden Schieberegister in Fig. 5c angedeutet ist. Ausserdem wird die zweite folgende Zeile n+2 in das Schieberegister 51 eingeschrieben.

Der Inhalt aller Schieberegister wird nun parallel verschoben, bis der gestörte Teil in der Zeile n den Ausgang des Schieberegisters 52 erreicht und der Vergleicher 25 einen isolierten schwarzen Strich erkennt und ein Fehlersignal abgibt. Dadurch werden die Umschalter 61 und 62 in die Arbeitslage entgegengesetzt zur dargestellten Stellung umgeschaltet, so dass nun der mittlere Eingang des Vergleichers 25 mit dem Ausgang des Schieberegisters 53 und der Eingang des Schieberegisters 54 mit seinem Ausgang verbunden ist. Dieser Zustand ist in Fig. 5d dargestellt, wobei die Ringschliessung des Schieberegisters 54 durch den nach aufwärts gerichteten Pfeil angedeutet ist. Dadurch wird in dieses Schieberegister anschliessend nach dem ungestörten Teil der Zeile n der entsprechend folgende Teil der vorhergehenden Zeile n—1 eingeschrieben. Parallel dazu wird das Ende der gestörten Zeile aus dem Schieberegister 53 in das Schieberegister 55 übertragen, wobei der Vergleich der Ausgänge von drei Schieberegistern, d.h. der Werte entsprechender Bildpunkte von drei benachbarten Zeilen, weiter durchgeführt wird und bei jedem erkannten isolierten schwarzen Strich dem Register 69 ein Übernahmesignal zugeführt wird, so dass es die Stellung des Zählers 65 in diesem Augenblick damit die Stelle des schwarzen Striches in der gestörten Zeile speichert. Bei jedem neuen schwarzen Strich wird dieser Wert wieder überschrieben, so dass am Ende, d.h. wenn der Anfang der gestörten Zeile n das Ende des Schieberegisters 54 erreicht hat, wie in Fig. 5e dargestellt ist, das Register 69 die Stelle des letzten isolierten schwarzen Striches und damit die Stelle des Endes des gestörten Teiles enthält.

Nun wird der Umschalter 75 in die Arbeitsstellung entgegengesetzt zur dargestellten Stellung umgeschaltet, so dass der Vergleicher 71 den Zählerstand des Zählers 65 mit dem Inhalt des Registers 69 vergleicht. Dann werden weiter Schiebetakte zugeführt, wobei gleichzeitig die nächstfolgende Zeile n+3 in das Schieberegister 51 weiter eingeschrieben und der Anfang der gestörten Zeile n und danach der entsprechend folgende Teil der vorhergehenden Zeile n—1 aus dem Schieberegister 54 dem Drucker zugeführt wird, bis der Vergleicher 71 am Ausgang 68 ein Gleichheitssignal abgibt, das angibt, dass nun der ungestörte Rest der gestörten Zeile n am Ausgang des Schieberegisters 55 angelangt ist. Durch dieses Signal am Ausgang 68 wird der Umschalter 63 in die Arbeitsstellung entgegengesetzt zur dargestellten Stellung umgeschaltet, und es wird der ungestörte Rest der gestörten Zeile zum Drucker übertragen. Dieser Zustand ist in Fig. 5f dargestellt, wobei der nach unten gerichtete Pfeil angibt, dass die Information vom linken Schieberegister abgenommen wird. Diese Informationsausgabe zum Drucker wird fortgesetzt, bis der Rest der gestörten Zeile n übertragen ist, d.h. z. B. der Zähler 65, der eine Zählkapazität gleich der Länge einer Zeile hat, seine Anfangsstellung wieder erreicht hat, und damit wird wieder auf den normalen Ablauf zurückgeschaltet, d.h. alle Schalter werden in die gezeichnete Stellung zurückgeschaltet.

Der Fall einer zu lang decodierten gestörten Zeile wird anhand der Fig. 6 erläutert. In der Spalte a ist der Zustand in dem Augenblick dargestellt, in dem das Zeilenende-Zeichen der gestörten Zeile empfangen wird. In diesem Augenblick ist der Anfang der gestörten Zeile bereits in die Schieberegister 52 und 53 eingeschrieben worden. Der tatsächlich zunächst noch nicht bekannte gestörte Bereich ist wieder bereits hier durch Querschraffur angegeben und muss durch die nachfolgend beschriebenen Korrekturmassnahmen verkeinert werden. Zur übersichtlicheren Erläuterung ist auch hier der Anfang der gestörten Zeile durch eine nach unten gerichtete Pfeilspitze und deren Ende durch eine nach oben gerichtete Pfeilspitze angedeutet.

Nach der Feststellung, dass eine Zeile gestört empfangen wurde, werden allen Schieberegistern weiter Schiebetakte zugeführt und dabei die auf die gestörte Zeile n folgende Zeile n+1 eingeschrieben, bis der Beginn der gestörten Zeile das Ende der Schieberegister 52 und 53 erreicht hat, was durch jeweils bei Beginn einer Zeile gestartete Zähler festgestellt werden kann. Der so erreichte Zustand ist in Fig. 6b dargestellt. Dabei ist die Information der der gestörten Zeile n vorhergehenden zweiten Zeile n—2 vollständig dem Drucker zugeführt worden, wie der nach unten gerichtete Pfeil am Ausgang des Schieberegisters 54 in Fig. 6a andeutet.

Mit Erreichen des in Fig. 6b dargestellten Zustandes werden nun im Gegensatz zum Fall der zu kurzen Zeile nur den Schieberegistern 51 und 53 Schiebetakte zugeführt, indem der Schalter 57 in Fig. 4 geöffnet wird. Gleichzeitig wird die folgende Zeile n+1 weiter eingeschrieben, bis diese vollständig im Schieberegister 51 enthalten ist.

Dieser Zustand ist in Fig. 6c dargestellt. Im Schieberegister 53 ist dann der vollständige hintere Teil der gestörten Zeile bis auf den vorderen Teil enthalten, um den die Länge dieser gestörten Zeile den vorgegebenen Wert von 1728 Bildpunkten überschreitet. Im Schieberegister 52 ist dagegen der vollständige vordere Teil bis auf den entsprechenden restlichen Teil enthalten. Nun wird wieder der Schalter 57 in Fig. 4 geschlossen, und alle Schieberegister erhalten Schiebetakte, wobei der Inhalt der vorhergehenden Zeile n—1 dem Drucker zugeführt wird, wie durch den senkrecht gerichteten Pfeil angedeutet ist, und gleichzeitig werden die Ausgänge der drei Schieberegister 51, 52 und 54 und damit die Werte entsprechender Bildpunkte der Vergleichsanordnung 25 zugeführt und dort verglichen, wie durch die entsprechenden abgeknickten Pfeile angedeutet ist. Ausserdem wird der Schalter 67 geschlossen, so dass der Zähler 65 zu zählen beginnt.

Sobald die Vergleichsanordnung 25 einen isolierten schwarzen Strich und damit den Beginn des gestörten Bereichs der Zeile n erkennt, gibt sie ein Fehlersignal ab. Dadurch werden die Umschalter 61 und 62 in die jeweils zur gezeichneten Stellung entgegengesetzte Arbeitslage umgeschaltet, so dass nun der Ausgang des Schieberegisters 53, der das Ende der gestörten Zeile n enthält, mit der Vergleichsanordnung 25 verbunden ist, und ausserdem ist das Schieberegister 54 im Ring geschlossen, wie durch den aufwärts gerichteten Pfeil in Fig. 6d angedeutet ist, so dass anstelle des gestörten Teils der gestörten Zeile n der entsprechende Teil der vorhergehenden Zeile n—1 übernommen wird. Der Vollständigkeit halber wird bemerkt, dass inzwischen bereits der Anfang der zweiten folgenden Zeile n+2 in den Anfang des Schieberegisters 51 eingeschrieben wurde.

Der in Fig. 6d dargestellte Zustand entspricht grundsätzlich dem in Fig. 5d dargestellten Zustand bei der Korrektur einer zu kurzen Zeile, und die weiteren Vorgänge laufen in völlig gleicher Weise wie bereits für Fig. 5e und 5f beschrieben ab, d.h. die Schieberegister erhalten weiterhin Schiebetakte, und das Register 69 wird bei jedem Auftreten den schwarzen Strich mit dem augenblicklichen Zählerstand des Zählers 65 überschreiben, so dass es schliesslich den Ort des Endes des gestörten Teils enthält. Nach Erreichen des Zustands in Fig. 6e wird dann der Anfang der gestörten Zeile n und danach anschliessend der entsprechende Teil der vorhergehenden Zeile n—1 zum Drucker übertragen, bis der Vergleicher 71 in Fig. 4 wieder das Ende des gestörten Bereichs der gestörten Zeile feststellt, und damit wird der Umschalter 63 umgeschaltet und der Inhalt des Schieberegisters 55 zum Drucker übertragen, bis die gestörte Zeile n vollständig ausgegeben ist. Danach beginnt wieder der normale Ablauf.

Wie bereits bei der Erläuterung der Vergleichsanordnungen in Fig. 3a und 3b erwähnt, kann ein isolierter schwarzer Strich erst erkannt werden, wenn er beendet ist. Damit wird der Beginn des gestörten Bereichs der gestörten Zeile erst am Ende des ersten isolierten schwarzen Striches erkannt, so dass letzterer noch mit ausgedruckt wird. Um auch diesen ersten isolierten schwarzen Strich zu unterdrücken, könnte in Abwandlung der beschriebenen Anordnung bzw. deren Funktion bei dem in Fig. 5c bzw. 6c erreichten Zustand in das Schieberegister 55 nicht der Inhalt der gestörten Zeile vom Schieberegister 53, sondern zunächst durch Ringschliessung des Schieberegisters 55 die vorhergehende Zeile n—1 wieder eingeschrieben werden, bis mit dem Ende des ersten isolierten schwarzen Striches das erste Fehlersignal von der Vergleichsanordnung 25 erzeugt wird. In diesem Augenblick zeigt der Zähler 65 das Ende des ersten isolierten schwarzen Striches und der Fehlerzähler 37 in Fig. 3a bzw. 3b dessen Länge an, so dass durch Subtraktion der Ort des Anfangs des ersten isolierten schwarzen Striches festgestellt und gespeichert werden kann. Sobald dieser Ort während der Ausgabe der gestörten Zeile zum Drucker auftritt, wird dann vorübergehend für die Länge des ersten schwarzen Striches bereits auf den Ausgang des Schieberegisters 55 umgeschaltet. Auf diese Weise kann das Ausdrucken des ersten isolierten schwarzen Striches bereits verhindert werden.

Die in Fig. 2 dargestellte Steueranordnung kann auf verschiedene Weise aufgebaut werden, beispielsweise als Ablaufsteuerung mittels eines Zählers oder Schieberegisters, wie dem Fachmann bekannt ist. Eine einfache Möglichkeit ist auch die Realisierung der Steueranordnung mittels eines Mikroprozessors.

**Patentansprüche**

1. Verfahren zur Fehlerkorrektur bei Faksimileübertragung von zweiwertiger grafischer Information auf einer Vorlage mittels elektrischer Signale, wobei die elektrischen Signale der Helligkeitswerte der aufeinanderfolgenenden Bildpunkte beim zeilenweisen Abtasten der Vorlage im Sender so in Code-Wörter umgewandelt werden, dass die Anzahl und gegebenenfalls die Länge der Code-Wörter über eine Zeile unterschiedlich ist, diese Code-Wörter zusammen mit Zeilenende-Markierungen zum Empfänger übertragen und die dort empfangenen Code-Wörter entsprechend der sendeseitigen Codierung in eine Folge elektrischer Signale entsprechend einer Folge von Bildpunkten zurückgewandelt und gespeichert werden und die Anzahl der aus den empfangenen Code-Wörtern rückgewandelten Bildpunkte jeder Zeile mit einer fest vorgegebenen Bildpunktzahl verglichen wird und bei Abweichung der Anzahl der Bildpunkte einer Zeile von der vorgegebenen Bildpunktzahl die Signale dieser Zeile mit entsprechenden, gespeicherten Signalen der vorhergehenden und der folgenden Zeile verglichen und unterschiedliche Signale gezählt werden und bei Überschreitung eines vorgegebenen Schwellwerts durch die Zählung mindestens die den folgenden Signalen zugeordneten Bildpunkte der gestört empfangenen Zeile so verschoben werden, dass diese gesamte Zeile die vorgegebene Anzahl Bildpunkte enthält, dadurch gekennzeichnet, dass die Anzahl nur unmittelbar aufeinanderfolgender schwarzer Bildpunkte bzw. Bildpunkte des weniger häufigen Helligkeitswertes, deren entsprechende Bildpunkte in beiden benachbarten Zeilen einen entgegengesetzten Helligkeitswert aufweisen, gezählt wird, und dass bei Überschreitung des vorgegebenen Schwellwerts durch die Zählung der Anfang dieser Zählung als Beginn einer Störung ausgewertet wird und die Verschiebung des Rests der gestörten Zeile von dem ersten durch diese Zählung ermittelten Bildpunkt an erfolgt.

2. Verfahren nach Anspruch 1, dadurch gekennzeichnet, dass die Bildpunkte mit entgegengesetztem Helligkeitswert nur dann gezählt bzw. die Zählung ausgewertet wird, wenn diesen Bildpunkten in der gestörten Zeile ein weisser Bildpunkt bzw. ein Bildpunkt des häufigeren Helligkeitswertes sowohl unmittelbar vorangeht bzw. diese Bildpunkte unmittelbar zu Beginn einer Zeile beginnen als auch ein solcher Bildpunkt unmittelbar folgt.

3. Verfahren nach Anspruch 1 oder 2, dadurch gekennzeichnet, dass die Zählung der Anzahl nur unmittelbar aufeinanderfolgender Bildpunkte des weniger häufigen Helligkeitswertes, deren entsprechende Bildpunkte in beiden benachbarten Zeilen einen entgegengesetzten Helligkeitswert aufweisen, auch nach der ersten Überschreitung des vorgegebenen Schwellwertes fortgesetzt wird und dass die nach dem Anfang der ersten Zählung, die zur Überschreitung des vorgegebenen Schwellwertes geführt, folgenden Bildpunkte bis nach dem Ende der letzten Zählung, die zu einer Überschreitung des vorgegebenen Schwellwertes führt, nicht dargestellt und durch andere Bildpunkte, insbesondere von benachbarten Zeilen, ersetzt werden.

4. Anordnung zur Durchführung des Verfahrens nach Anspruch 1 oder einem der folgenden, mit einem Decoder (13) zum Umwandeln der empfangenen Code-Wörter in entsprechende Folgen elektrischer Signale entsprechend dem darzustellenden Helligkeitswert, einem Zähler (21) zum Zählen der Gesamtzahl der Signale je Zeile, einem Vergleicher (23) zum Vergleichen der Zählerstellung mit einem vorgegebenen Wert beim Eintreffen einer Zeilenende-Markierung und mit einer Speicheranordnung (15), die drei aufeinanderfolgende empfangene Zeilen speichert, wobei im Fall einer gestörten Zeile die vorhergehende und mindestens ein Teil der nachfolgenden Zeile gespeichert ist, und an die eine Darstellungsanordnung (17) zum sichtbaren Wiedergeben der umgewandelten elektrischen Signale angeschlossen ist, dadurch gekennzeichnet, dass eine Vergleichsanordnung (25) mit solchen Ausgängen der Speicheranordnung (15) verbunden ist, dass die Vergleichsanordnung (25) nacheinander die Signale jeweils eines Bildpunktes der gestörten Zeile (n) sowie der entsprechenden Bildpunkte der beiden benachbarten Zeilen (n+1, n—1) empfängt und ein Fehlersignal abgibt, wenn das Signal des Bildpunktes der gestörten Zeile einen ersten Wert und die Signale der Bildpunkte der benachbarten Zeilen den zweiten Wert haben, und dass an die Vergleichsanordnung (25) ein Störungszähler (37) angeschlossen ist, der die Fehlersignale zählt und bei Erreichen einer vorgegebenen Stellung ein Störungssignal erzeugt und einer Steueranordnung (27) zuführt, die die Adressierung der Bildpunkte der gestörten Zeile vom Beginn der Zählung des Störungszählers (37) an in der Speicheranordnung (15) relativ zu den vorhergehenden Bildpunkten der gestörten Zeile verschiebt und den so erhaltenen Inhalt der Speicheranordnung der Darstellungsanordnung (17) zuführt.

5. Anordnung nach Anspruch 4, dadurch gekennzeichnet, dass der Störungszähler (37) bei Erreichen einer vorgegebenen Stellung ein in der Vergleichsanordnung (25) erzeugtes Störungssignal freigibt.

6. Anordnung nach Anspruch 4 oder 5, dadurch gekennzeichnet, dass die Vergleichsanordnung (25)

— ein erstes Speicherelement (31), das in die Arbeitslage (Q) gesetzt wird, wenn sowohl das zugeführte Signal der gestörten Zeile (n) als auch gleichzeitig das entsprechende Signal mindestens einer benachbarten Zeile (n+1, n—1) den ersten Wert haben,

— ein erstes Verknüpfungselement (33), das in Ruhelage des ersten Speicherelements (31) und bei einem Signal der gestörten Zeile mit dem ersten Wert und gleichzeitig einem Signal in beiden benachbarten Zeilen mit dem zweiten Wert ein Zählsignal an den Störungszähler (37) abgibt, und

— ein zweites Verknüpfungselement (35) enthält, das ein Störungssignal (ES) abgibt, wenn in der Ruhelage des ersten Speicherelements (31) und einer Zählerstellung des Störungszählers (37) über einer vorgegebenen Stellung ein Bildpunkt der gestörten Zeile mit dem zweiten Wert auftritt,

— wobei ein Bildpunkt der gestörten Zeile mit dem zweiten Wert ausserdem verzögert den Störungszähler (37) in die Anfangsstellung und das erste Speicherelement (31) in die Ruhestellung bringt.

7. Anordnung nach Anspruch 6, dadurch gekennzeichnet, dass die Vergleichsanordnung (25) ein zweites Speicherelement (45) enthält und beide Speicherelemente (31, 45) taktgesteuerte J-K-Flipflops sind, wobei der J-Eingang des zweiten Speicherelements (45) mit dem Ausgang des ersten Verknüpfungselements (33) und der K-Eingang beider Speicherelemente (31, 45) mit dem invertierten Ausgang der Speicheranordnung (15) für die gestörte Bildzeile verbunden ist und das zweite Speicherelement (45) in der Ruhelage ($\overline{Q}$) den Störungszähler (37) auf die Anfangsstellung zurücksetzt und in der Arbeitslage (Q) das zweite Verknüpfungselement (35) freigibt.

8. Anordnung nach Anspruch 4 oder einem der folgenden, dadurch gekennzeichnet, dass die Speicheranordnung (15) aus Schieberegistern (51 bis 55) besteht und die Steueranordnung (27) zur relativen Verschiebung der Adressierung den Schieberegistern (51 bis 55) eine unterschiedliche Anzahl Schiebetakte zuführt.

9. Anordnung nach Anspruch 7, dadurch gekennzeichnet, dass die Speicheranordnung (15) fünf Schieberegister (51 bis 55) mit je einem seriellen Eingang und einem seriellen Ausgang und einer Länge entsprechend der vorgegebenen Anzahl Bildpunkte einer Zeile enthält, von denen

— das erste Schieberegister (51) mit dem Eingang an den Decoder (13) angeschlossen ist und die decodierten Signale der Bildpunkte empfängt und mit dem Ausgang an den Vergleicher (25) und an den Serieneingang des zweiten und des dritten Schieberegisters (52, 53) angeschlossen ist,

— das zweite Schieberegister (52) mit dem Ausgang an den Ruhekontakt eines ersten und eines zweiten Umschalters (61, 62) angeschlossen ist,

— das dritte Schieberegister (52) mit dem Ausgang an den Arbeitskontakt des ersten Umschalters (61) und den Eingang des fünften Schieberegisters (55) angeschlossen ist,

— das vierte Schieberegister (54) mit dem Eingang an den Ausgang des zweiten Umschalters (62) und mit dem Ausgang an den Arbeitskontakt des zweiten Umschalters (62) und den Ruhekontakt eines dritten Umschalters (63) und an den Vergleicher (25) angeschlossen ist,

— das fünfte Schieberegister (55) mit dem Ausgang an den Arbeitskontakt des dritten Umschalters angeschlossen ist,

wobei der Ausgang des ersten Umschalters (61) an den Vergleicher angeschlossen ist und zur relativen Verschiebung der Adressierung, wenn mindestens der Anfang einer gestörten Zeile (n) in das zweite und dritte Schieberegister (52, 53) eingeschrieben ist, bei einer zu kurzen gestörten Zeile das zweite, vierte und fünfte Schieberegister (52, 54, 55) und bei einer zu langen gestörten Zeile das erste und dritte Schieberegister (51, 53) zusätzliche Schiebetakte erhalten, wonach bei Auftreten eines Störungssignals der Vergleichsanordnung (25) der erste und der zweite Umschalter (61, 62) in die Arbeitslage geschaltet werden, bis das Ende der gestörten Zeile gerade in das fünfte Schieberegister (55) eingeschrieben ist, und der dritte Umschalter (63) in die Arbeitslage geschaltet wird, wenn das Ende des gestörten Teils der gestörten Zeile den Ausgang des fünften Schieberegisters (55) erreicht hat, und zurückgeschaltet wird, wenn das Ende der gestörten Zeile den Ausgang des fünften Schieberegisters erreicht hat, und der Ausgang des dritten Umschalters (63) den Ausgang der Speicheranordnung darstellt.

10. Anordnung nach Anspruch 9, dadurch gekennzeichnet, dass die Umschalter (61, 62, 63) als elektronische Umschalter ausgebildet sind.

**Claims**

1. A method of correcting errors in the facsimile transmission of binary graphic information on a document by means of electric signals, the electric signals of the luminance values of the consecutive picture elements during line-by-line scanning of the document being so converted into code words in the transmitter that the number and, possibly, the length of the code words over one line is variable, that these code words together with end-of-line characters are transmitted to the receiver and the code words received there are reconverted in correspondence with the code at the transmitter side into a sequence of electric signals corresponding to the sequence of picture elements and are stored and the number of picture elements of each picture line reconverted from the received code words is compared with a predetermined number of picture elements and at a deviation of the number of picture elements of a line from the predetermined number of picture elements the signals of this line are compared with the corresponding stored signals of the preceding and of the following lines and different signals are counted and when the count exceeds a predetermined threshold at least the picture elements of the disturbedly received line, which picture elements are associated with the subsequent signals, are shifted such that the entire line comprises the number of predetermined picture elements, characterized in that the number of only immediately consecutive black picture elements, or of picture elements of the luminance values which occur less frequently, and whose corresponding picture elements in the two adjacent lines have opposite luminance values are counted and that when the count exceeds the predetermined threshold value the commencement of this count is interpreted as the beginning of a disturbance and the shift of the remainder of this disturbed line starts as from the first picture element determined by this count.

2. A method as claimed in Claim 1, characterized in that the picture elements having opposite luminance values are counted or the count is evaluated only when in the disturbed line these picture elements are immediately preceded by a white picture element or a picture element of the luminance value which occurs more frequently, or that these picture elements start immediately at the beginning of a line and when such a picture element also follows immediately.

3. A method as claimed in Claim 1 or 2, characterized in that the count of the number of immediately consecutive picture elements of the luminance value which occurs less frequently and whose corresponding picture elements in the two adjacent lines have opposite luminance values, after the predetermined threshold value is exceeded for the first time is continued and that the picture elements following the start of the first count which resulted in the predetermined threshold value being exceeded to the end of the last count which resulted in the predetermined threshold value being exceeded are not displayed and are replaced by other picture elements, more specifically by picture elements of adjacent lines.

4. An arrangement for putting the method as claimed in Claim 1 or one of the following Claims into effect, comprising a decoder (13) for converting the received code words into corresponding sequences of electric signals corresponding to the luminance values to be displayed, a counter (21) for counting the total number of signals per line, a comparator (23) for comparing the count with a predetermined value when an end-of-line character is received and a storage device (15) which stores three consecutively, received lines, the preceding line and at least a portion of the next line being stored in the case of a disturbed line, and to which a display device (17) for displaying visibly the converted electric signals is connected, characterized in that a comparator (25) is connected to such outputs of the storage device (15) that the comparator (25) receives one after the other the signals of successive picture elements of the disturbed line (n) as well as those of the corresponding picture elements of the two adjacent lines (n+1, n—1) and releases an error signal when the signal of a picture element of the disturbed line has a first value and the corresponding signals of the picture elements of the adjacent lines have the second value, and that there is connected to the comparator (25) a disturbance counter (37) which counts the error signals and generates a noise signal when a predetermined position is reached and applies this noise signal to a control device (27) which shifts the picture elements of the disturbed line from the beginning of the count by the disturbance counter (37) with respect to the preceding picture elements of the disturbed line and applies the storage device content thus obtained to the display device (17).

5. An arrangement as claimed in Claim 4, characterized in that the disturbance counter (37) releases a noise signal generated in the comparator (25) when a predetermined position is reached.

6. An arrangement as claimed in Claim 4 or 5, characterized in that the comparator (25) comprises

— a first storage element (31), which is adjusted to the operating position (Q) when the applied signal of the disturbed line (n) as well as, simultaneously, the corresponding signal of at least one adjacent line (n+1, n—1) have the first value,

— a first logic gate (33), which applies a counting signal to the disturbance counter (37) in the non-operating condition of the first storage element (31) and at the occurrence of a signal of the disturbed line having the first value and, simultaneously, a signal in the two ajacent lines having the second value, and

— a second logic gate (35), which produces a noise signal (ES) when, in the non-operating condition of the first storage element (31), and with the disturbance counter (37) in a predetermined counting position, a picture element of the disturbed line occurs with the second value,

— wherein a picture element of the disturbed line having the second value also adjusts with a delay the disturbance counter (37) to the initial position and the first storage element (31) to the non-operating condition.

7. An arrangement as claimed in Claim 6, characterized in that the comparator (25) comprises a second storage element (45) and the two storage elements (31, 45) are clock pulse-controlled J-K flip-flops, the J-input of the second storage element (45) being connected to the output of the first logic gate (33) and the K-input of the two storage elements (31, 45) being connected to the inverted output of the storage device (15) for the disturbed picture line and the second storage element (45) readjusting in the non-operating condition Q̄ the disturbance counter (37) to the initial position and releasing the second logic gate (35) in the operating position (Q).

8. An arrangement as claimed in Claim 4 or one of the following Claims, characterized in that the storage device (15) consists of shift registers (51-55) and the control device (27) applies a different number of shift clock pulses to the shift registers (51-55) for the relative shift of the picture elements.

9. An arrangement as claimed in Claim 7, characterized in that the storage device (15) comprises five shift registers (51-55) each having a serial input and a serial output and a length corresponding to the predetermined number of picture elements of a line, of which

— the first shift register (51) is connected to the decoder (13) by means of its input and receives the decoded signals of the picture elements, and is connected to the comparator (25) by means of its output and to the serial input of the second and the third shift registers (52, 53),

— the second shift register (52) is connected by means of its output to the normally-closed contact of a first and a second changeover switch (61-62),

— the third shift register (53) is connected by means of its output to the normally-open contact of the first switch (61) and to the input of the fifth shift register (55),

— the fourth shift register (54) is connected by menas of its input to the output of the second switch (62) and by means of its output to the normally-open contact of the second switch (62) and to the normally-closed contact of a third switch (63) and to the comparator (25),

— the fifth shift register (55) is connected by means of its output to the normally-open contact of the third switch,

and the output of the first switch (61) is connected to the comparator, and for the relative shift of the picture elements, when at least the beginning of a disturbed line (n) has been written into the second and third shift registers (52, 53), the second, fourth and fifth shift registers (52, 54, 55) in the case of a disturbed line which is too short and the first and third shift registers (51, 53) in the case of a disturbed line which is too long receive additional shift clock pulses, whereafter at the occurrence of a noise signal produced by the comparator (25) the first and the second change-over switches (61, 62) are adjusted to the normally-open position until the end of the disturbed line has just been written into the fifth shift register (55), and the third change-over switch (63) is adjusted to the normally-open position when the end of the disturbed portion of the disturbed line has reached the output of the fifth shift register (55) and is reset, the output of the third change-over switch (63) forming the output of the shift device.

10. An arrangement as claimed in Claim 9, characterized in that the change-over switches (61, 62, 53) have been implemented as electronic switches.

**Revendications**

1. Procédé pour la correction d'erreurs lors de la transmission fac-similé d'informations graphiques bivalentes se trouvant sur un original par des signaux électriques, suivant lequel les signaux électriques des valeurs de luminosité des points d'image successifs, dans le cas d'une analyse ligne par ligne de l'original, sont convertis dans l'émetteur en mots de code d'une manière telle que le nombre et, le cas échéant, la longueur des mots de code d'une ligne soient différents, ces mots de code sont transmis au récepteur en compagnie de marques fin de ligne et les mots de code reçus en cet endroit, selon le codage à l'émission sous forme d'une succession de signaux électriques sont stockés après reconversion correspondante en une succession de points d'image, et le nombre des points d'image, obtenus par reconversion des mots de code reçus pour chaque ligne, est comparé à un nombre de points d'image fixe et établi et, dans le cas d'un écart entre le nombre de points d'image d'une ligne et le nombre de points d'image préétabli, les signaux de cette ligne sont comparés à des signaux stockés correspondants de la ligne précédente et de la ligne suivante, les différences de signaux sont comptées et, dans le cas où le comptage dépasse une valeur de seuil, au moins les points d'image associés aux signaux suivants de la ligne reçue perturbée sont déplacés d'une manière telle que l'ensemble de cette ligne contienne le nombre préétabli de points d'image, caractérisé en ce que l'on ne compte que le nombre de points d'image noirs ou de points d'image de la valeur de luminosité la moins fréquente qui se succèdent directement et dont les points d'image correspondants dans deux lignes voisines présentent des valeurs de luminosité opposées, et, lorsque le compte dépasse la valeur de seuil préétablie, le début de ce comptage est exploité comme début d'une perturbation et le déplacement du reste de la ligne perturbée s'effectue à partir du premier point d'image prédéterminé par ce comptage.

2. Procédé suivant la revendication 1, caractérisé en ce qu'on ne compte les points d'image à valeur de luminosité opposée ou on n'exploite le comptage que lorsque ces points d'image dans la ligne perturbée sont ou bien précédés immédiatement par un point d'image clair ou un point d'image de la valeur de luminosité plus fréquente ou que ces points d'image débutent immédiatement au commencement d'une ligne ou bien suivis immédiatement par un tel point d'image.

3. Procédé suivant la revendication 1 ou 2, caractérisé en ce que le comptage exclusif du nombre des points d'image de la valeur de luminosité la moins fréquente qui se succèdent directement et dont les points d'image correspondants dans deux lignes voisines présentent des valeurs de luminosité opposées, se poursuit aussi après le premier dépassement de la valeur de seuil préétablie et les points d'image suivant le début du premier comptage, qui aboutit à un dépassement de la valeur de seuil préétablie, jusqu'à la fin du dernier comptage qui aboutit à un dépassement de la valeur de seuil préétablie, ne sont pas représentés et sont remplacés par d'autres points d'image, en particulier de lignes voisines.

4. Système pour l'exécution du procédé suivant la revendication 1 ou l'une ou l'autre des revendications suivantes comportant un décodeur (13) pour convertir les mots de code reçus en des séquences correspondantes de signaux électriques selon la valeur de luminosité représentée, un compteur (21) pour compter le nombre total des signaux de chaque ligne, un comparateur (23) pour comparer la position de comptage à une valeur préétablie lors de la réception d'une marque de fin de ligne et un dispositif de stockage (15) qui stocke trois lignes reçues successives, étant entendu que, dans le cas d'une ligne perturbée, la ligne précédente et au moins une partie de la ligne suivante sont stockées, un dispositif de représentation (17) y étant connecté pour reproduire de manière visible les signaux électriques convertis, caractérisé en ce qu'un dispositif comparateur 25 est connecté à ces sorties du dispositif de stockage (15), le dispositif comparateur (25) reçoit les uns à la suite des autres les signaux d'un point d'image de la ligne perturbée (n) ainsi que les points d'image correspondants des deux lignes voisines (n+1, n—1) et produit un signal d'erreur lorsque le signal du point d'image de la ligne perturbée a une première valeur et que les signaux de points d'image des lignes voisines ont la deuxième valeur et un compteur de perturbations (37) est connecté au dispositif comparateur (25), ce compteur comptant les signaux d'erreur et, lorsqu'il atteint un état préétabli, produisant un signal de perturbation et alimentant un dispositif de commande (27) qui déplace l'adressage des points d'image de la ligne perturbée à partir du début de comptage du compteur de perturbations (37) dans le dispositif de stockage (15) par rapport aux points d'image précédents de la ligne perturbée et transmet le contenu ainsi reçu du dispositif de stockage au dispositif de représentation (17).

5. Système suivant la revendication 4, caractérisé en ce que le compteur de perturbations (37) libère un signal de perturbation produit dans le dispositif comparateur (25) lorsqu'il atteint un état préétabli.

6. Système suivant la revendication 4 ou 5, caractérisé en ce que le dispositif comparateur (25)
— comprend un premier élément de stockage (31) qui est positionné dans la position de travail (Q) lorsque le signal de la ligne perturbée (n) qui lui est amené et simultanément le signal correspondant d'au moins une ligne voisine (n+1, n—1) ont la première valeur,
— un premier élément logique (33) qui, dans la position de repos du premier élément de stockage (31) et pour un signal de la ligne perturbée présentant la première valeur et simultanément pour un signal dans les deux lignes voisines présentant la seconde valeur, fournit un signal de comptage au compteur de perturbations (37), et
— un deuxième élément logique (35) qui produit un signal de perturbation (ES) lorsque, dans la position de repos du premier élément de stockage (31) et dans un état de comptage du compteur de perturbations (37) supérieur à un état préétabli, un point d'image de la ligne perturbée apparaît avec la seconde valeur,
— étant entendu qu'un point d'image de la ligne perturbée ayant la deuxième valeur retarde, en outre, le compteur de perturbations (37) dans la position de départ et amène le premier élément de stockage (31) dans la position de repos.

7. Système suivant la revendication 6, caractérisé en ce que le dispositif comparateur (25) contient un deuxième élément de stockage (45) et les deux éléments de stockage (31, 45) sont des bascules (J-K) pilotées par des impulsions d'horloge, l'entrée (J) du deuxième élément de stockage (45) étant connectée à la sortie du premier élément logique (33) et l'entrée (K) des éléments de stockage (31, 45) étant connectée à l'entrée inverseuse du dispositif de stockage (15) pour les lignes d'image perturbées et le deuxième élément de stockage (45), dans la position de repos ($\overline{Q}$), repositionne le compteur de perturbations (37) dans son état initial et, dans la position de travail (Q), libère le deuxième élément logique (35).

8. Système suivant la revendication 4 ou l'une quelconque des revendications suivantes, caractérisé en ce que le dispositif de stockage (15) est formé de registres à décalage (51 à 55) et le dispositif de commande (27) pour le décalage relatif de l'adressage des registres à décalage (51 à 55) fournit un nombre différent d'impulsions d'horloge de décalage.

9. Système suivant la revendication 7, caractérisé en ce que le dispositif de stockage (15) contient cinq registres à décalage (51) à (55) comportant chacun une entrée série et une sortie série et présentant une longueur correspondant au nombre préétabli de points d'image d'une ligne et parmi lesquels

— le premier registre à décalage (51) est connecté par son entrée au décodeur (13), reçoit les signaux décodés de points d'image et est connecté par sa sortie au comparateur (25) et au montage en série du deuxième et du troisième registre à décalage (52, 53),

— le deuxieme registre à décalage (52) est connecté par sa sortie au contact de repos d'un premier et d'un deuxième commutateur (61, 62),

— le troisième registre à décalage (52) est connecté par sa sortie au contact de travail du premier commutateur (61) et à l'entrée du cinquième registre à décalage (65),

— le quatrième registre à décalage (54) est connecté par son entrée à la sortie du deuxième commutateur (62) et par sa sortie au contact de travail du deuxième commutateur (62) ainsi qu'au contact de repos d'un troisième commutateur (63) et au comparateur (25),

— le cinquième registre à décalage (55) est connecté par sa sortie au contact de travail du troisième commutateur,

de sorte que la sortie du premier commutateur (61) est connectée au comparateur et, en vue du décalage relatif de l'adressage, lorsqu'au moins le début d'une ligne perturbée (n) est introduit dans le deuxième et le troisième registre à décalage (52, 53), dans le cas d'une ligne perturbée trop courte, le deuxième, le quatrième et le cinquième registre à décalage (52, 54, 55) reçoivent des impulsions d'horloge de décalage supplémentaires et, dans le cas d'une ligne perturbée trop longue, le premier et le troisième registre à décalage (51, 53) reçoivent des impulsions d'horloge de décalage supplémentaires, à la suite de quoi, lors de l'apparition d'un signal de perturbation du dispositif comparateur (25), le premier et le deuxième commutateur (61, 62) sont commutés dans la position de travail jusqu'à ce que la fin de la ligne perturbée soit directement introduite dans le cinquième registre à décalage (55) et le troisième commutateur (63) est commuté dans la position de travail lorsque la fin de la partie perturbée de la ligne perturbée a atteint la sortie du cinquième registre à décalage (55) et est ramené dans sa position initiale lorsque la fin de la ligne perturbée a atteint la sortie du cinquième registre à décalage, et la sortie du troisième commutateur (63) représente la sortie du dispositif de stockage.

10. Système suivant la revendication 9, caractérisé en ce que les commutateurs (61, 62, 63) ont la forme de commutateurs électroniques.

FIG.1

FIG.2

FIG.3a

FIG .3b

0 022 306

FIG.4

19

FIG.5

FIG.6